# EUROPÄISCHE PATENTANMELDUNG

(11) **EP 0 631 920 A2**
(43) Veröffentlichungstag der Anmeldung: **04.01.1995**
(21) Anmeldenummer: 94890111.1
(22) Anmeldetag: 29.06.1994
(51) Int. Cl.: B61L 15/00, G08C 15/00

(54) **Steuerungsvorrichtung für zumindest zwei in einem Schienenfahrzeug angeordnete elektrische Verbraucher**

(30) Priorität: 30.06.1993 AT 1281/93
(71) Anmelder: ALEX. FRIEDMANN KOMMANDITGESELLSCHAFT, A-1020 Wien (AT)
(72) Erfinder: Bauer, Franz, A-1140 Wien (AT); Herzog, Walter, Dipl.-Ing., A-1030 Wien (AT); Marschnigg, Ernst, A-1090 Wien (AT); Konecny, Manfred, A-1200 Wien (AT); Martin, Robert, Dipl.-Ing. Dr., A-1230 Wien (AT); Suschnig, Andreas, Dipl.-Ing., A-1090 Wien (AT); Benes, Robert, A-1230 Wien (AT); Zusl, Karin, A-1150 Wien (AT)
(74) Vertreter: Matschnig, Franz, Dipl.-Ing.

(57) **Zusammenfassung**

1. Steuerungsvorrichtung für zumindest zwei in einem Schienenfahrzeug angeordnete elektrische Verbraucher (6₁, 6₂, 6₃, ..., 6₁₀), die über je ein Stellglied (5₁, 5₂, 5₃, ..., 5₁₀) an eine Stromversorgungsleitung (7) angeschlossen sind, wobei jedes Stellglied (5₁, 5₂, 5₃, ... 5₁₀) von einer zentralen Steuereinheit (1) ansteuerbar ist und der zentralen Steuereinheit (1) zur Ansteuerung der zumindest zwei Verbraucher (6₁, 6₂, 6₃, ..,. 6₁₀) eine Multiplex-Sendeanlage (3) zugeordnet ist, welche über eine Multiplex-Verbindung (4) mit je einem Multiplexempfänger für jedes anzusteuernde, dem zugehörigen Verbraucher räumlich benachbarte Stellglied (5₁, 5₂, 5₃, ..., 5₁₀) verbunden ist. Die Multiplex-Verbindung kann beispielsweise eine elektrische oder optische Leitung oder eine Funkstrecke sein.

## Beschreibung

Gegenstand der Erfindung ist eine Steuerungsvorrichtung für zumindest zwei in einem Schienenfahrzeug angeordnete elektrische Verbraucher, die über je ein Stellglied an eine Stromversorgungsleitung angeschlossen sind, wobei jedes Stellglied von einer zentralen Steuereinheit ansteuerbar ist.

Bekannte Steuerungsvorrichtungen für Verbraucher in einem Schienenfahrzeug weisen in der Regel eine zentrale Steuereinheit auf, welche mit einer zentralen Schalteinheit verbunden ist, in welcher beispielsweise für jeden Verbraucher je ein Stellglied vorgesehen ist, welches über je eine Stichleitung mit dem zugeordneten Verbraucher verbunden ist. Die von der Steuereinheit gelieferten Signale werden somit in der zentralen Schalteinheit verarbeitet, wonach die zu den bestimmten Verbrauchern führenden Stichleitungen, beispielsweise über Schützschalter zu- oder weggeschaltet werden. Eine solche bekannte Vorrichtung wird beispielsweise von der Anmelderin unter der Bezeichnung BK/1-System vertrieben.

Ein Nachteil dieser bekannten Steuerungsvorrichtungen liegt unter anderem darin, daß für die zentrale Schalteinheit in den Schaltschränken eines Schienenfahrzeuges viel Platz beansprucht wird. Weiters ist die Verkabelung der Verbraucher aufwendig, da von jedem Schalter in der zentralen Schalteinheit je ein Kabel zu jedem Verbraucher geführt werden muß. Da die Schalteinheit und der anzusteuernde Verbraucher bei Schienenfahrzeugen vielfach weit voneinander entfernt sind, entstehen dadurch hohe Verkabelungskosten.

Ein wesentlicher Nachteil der langen Stichleitungen zwischen Stellglied und Verbraucher, welche oft über mehrere Klemmen und Stecker geführt werden, besteht in der potentiellen Gefahr von Leitungskurzschlüssen im Betrieb und bei Wartungsarbeiten, wodurch insbesondere elektronische Stellglieder wie Halbleiterrelais zerstört werden können oder aber durch aufwendige Maßnahmen geschützt werden müssen.

Aus der DE-OS 41 26 840 ist eine Infrarot-Freistrahl-Übertragungsvorrichtung für Fahrzeuge bekannt geworden, bei welcher Signale durch einen im Bereich des Armaturenbrettes angeordneten Infrarotsender unidirektional über eine Mehrzahl von Sendekanälen zu den Infrarotempfängern übertragen werden, welche räumlich verteilt in der Innenkabine des Fahrzeuges angeordnet sind. Durch Vielfachreflexionen an den Innenwänden soll sich eine Verbesserung des Störabstandes ergeben. Ein Nachteil dieser Vorrichtung liegt unter anderem darin, daß das Übertragungssystem sehr störungsanfällig ist und besondere räumliche Verhältnisse ebenso voraussetzt, wie bestimmte Reflexionseigenschaften der Innenwände etc. Weiters bietet eine unidirektionale Signalverbindung in vielen Fällen nicht die erforderliche Übertragungssicherheit.

Daher ist es eine Aufgabe der Erfindung, eine Steuerungsvorrichtung für zumindest zwei Verbraucher in einem Schienenfahrzeug anzugeben, bei welcher die oben genannten Nachteile, insbesondere hohe Verkabelungskosten, die Zerstörungsgefahr durch Leitungskurzschlüsse oder etwaige Übertragungsfehler vermieden werden.

Diese Aufgabe wird dadurch gelöst, daß der zentralen Steuereinheit zur Ansteuerung der zumindest zwei Verbraucher eine Multiplex-Sendeanlage zugeordnet ist, welche über eine Multiplex-Verbindung mit je einem Multiplexempfänger für jedes anzusteuernde, dem zugehörigen Verbraucher räumlich benachbarte Stellglied verbunden ist. Durch diese Maßnahme kann jeder Verbraucher, welcher der zentralen Steuereinheit zugeordnet ist, anhand einer einzigen Verbindung zwischen dieser zentralen Steuereinheit und den zumindest zwei Verbrauchern angesteuert werden.

Vorteilhafte Ausführungsformen einer erfindungsgemäßen Steuerungsvorrichtung ergeben sich dadurch, daß die Multiplex-Verbindung entweder eine elektrische oder optische Leitung oder eine Infrarot- bzw. Funkstrecke ist.

Bei einer besonders vorteilhaften Ausführungsform der Erfindung ist die Multiplex-Verbindung gleichzeitig die Stromversorgungsleitung für den Verbraucher. Bei dieser Ausführungsform entfällt jede zusätzliche Verkabelung des Schienenfahrzeuges.

In vorteilhafter Weise sind die Stellglieder Schalter mit eingebautem Multiplexempfänger, wobei die zentrale Steuereinheit zum selektiven Ein- und Ausschalten der Verbraucher über die angeschlossene Multiplex-Sendeanlage und die Multiplex-Verbindung eingerichtet ist.

Eine einfache Form der Fehlerdiagnose wird dadurch ermöglicht, daß die zentrale Steuereinheit zum sequentiellen, selektiven Ein- und Ausschalten einzelner Verbraucher einer Gruppe von Verbrauchern sowie zur Messung des Stromes in einer zu dieser Gruppe von Verbrauchern führenden Leitung eingerichtet ist.

Die erfindungsgemäße Steuerungsvorrichtung kann zum Ansteuern einer Reihe von Verbrauchern eines Schienenfahrzeuges verwendet werden. Beispielsweise sind solche Verbraucher die Beleuchtung (z.B. Abteil-, WC-, Gang- und Notbeleuchtung), Anzeige- und Meldeeinrichtungen, sowie Heizungen (z.B. Kanal-, Einstiegsraum-, WC- und Nachheizkörper) Zuluft-, Druckschutz- und Fortluftventilatoren, Antriebe für Luftklappen, Antriebe für automatische Türen, Magnetventile in Klimaanlagen und Vakuumtoiletten sowie andere elektrische Maschinen wie Kompressoren oder Kondensatorlüftermotoren.

Weitere Ausgestaltungsmerkmale und Vorteile der Erfindung ergeben sich aus der folgenden Beschreibung eines Ausführungsbeispiels der Erfindung. Darin wird auf die beiliegenden Figuren bezug genommen, die zeigen:
Figur 1 ein Blockschaltbild einer erfindungsgemäßen Steuerungsvorrichtung,
Figur 2 ein Blockschaltbild einer Ausführungsform einer erfindungsgemäßen Steuerungsvorrichtung, bei welcher die Multiplex-Verbindung eine Funk- bzw. Infrarotstrecke ist,
Figur 3 ein Blockschaltbild einer weiteren Ausführungsform einer erfindungsgemäßen Steuerungsvorrichtung, bei welcher die Multiplex-Verbindung die Stromversorgungsleitung ist,
Figur 4 ein elektrisches Detailschaltbild der Ausführungsform gemäß Figur 3.

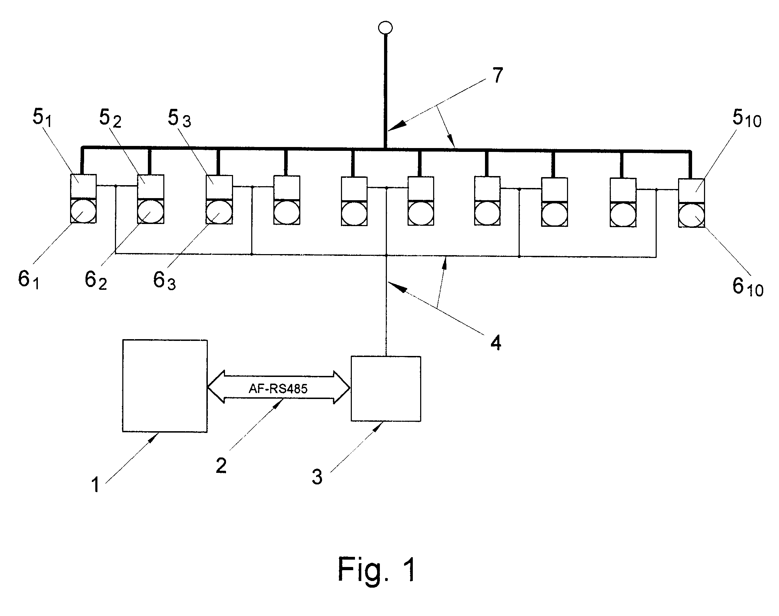

In den Figuren 1, 2 und 3 ist eine erfindungsgemäße Steuerungsvorrichtung dargestellt, welche eine zentrale Steuereinheit 1 aufweist, die über einen Bus 2 mit einer Multiplex-Sendeanlage 3 verbunden ist. Der Bus 2 ist ein in dem Schienenfahrzeug installierter firmenspezifischer serieller Bus mit der Bezeichnung AF-485 und überträgt die von der zentralen Steuereinheit 1 gelieferten Signale an die Multiplex-Sendeanlage 3, die über eine Multiplex-Verbindung 4 mit jedem anzusteuernden Stellglied 5₁, 5₂, 5₃, ..., 5₁₀ verbunden ist, wobei jedes dieser Stellglieder 5₁, 5₂, 5₃, ..., 5₁₀ je einen Multiplexempfänger aufweist. Jeder in einem Stellglied 5 integrierte Multiplexempfänger bildet einen Teil einer dezentralen Demultiplex-Anlage, die aufgrund der peripheren Konzeption auf alle Stellglieder verteilt ist, sodaß im vorliegenden Fall keine gesonderte Demultiplex-Vorrichtung erforderlich ist.

Jedes Stellglied 5₁, 5₂, 5₃, ..., 5₁₀ ist unmittelbar an je einem Verbraucher 6₁, 6₂, 6₃, ..., 6₁₀ angeordnet, wobei jeder Verbraucher über je ein solches Stellglied mit einer Stromversorgungsleitung 7 verbunden ist. Typische Stromversorgungen für Schienenfahrzeuge sind beispielsweise ein 24V Gleichstromnetz für Beleuchtung, Steuerungen, Anzeige und Meldeeinrichtungen oder ein 380/220 Wechselstromnetz, für Heizung und Lüftung. Bei den vorliegenden Ausführungsbeispielen gemäß der Figuren 1 bis 3 handelt es sich um ein 380/220V Netz, an welchem als Verbraucher 6 eine Mehrzahl von Nachheizkörpern vorgesehen sind, die in einem Zuluftkanal einer Klimaanlage angeordnet sind. Diese Nachheizkörper 6 haben die Aufgabe, in das Abteil einströmende Zuluft auf eine bestimmte Temperatur vorzuwärmen. Diese Temperatur wird im allgemeinen über einen (nicht dargestellten) Sollwertschalter vorgegeben, der mit der zentralen Steuereinheit 1 verbunden ist, die im vorliegenden Fall eine zentrale Klimasteuerung eines Schienenfahrzeuges ist. Diese zentrale Klimasteuerung 1 liefert nun nach Verarbeitung aller Sollwert- und Istwertdaten und gegebenenfalls weiterer Daten, wie die Außentemperatur, ein Signal an die Multiplex-Sendeanlage 3, welches von dieser Sendeanlage für die Multiplexübertragung in ein geeignetes Datenpaket verwandelt, an die physikalischen Gegebenheiten der Multiplex-Verbindung 4 angepaßt und über die Multiplex-Verbindung an die anzusteuernden Stellglieder 5 übertragen wird.

Im vorliegenden Fall sind an die Multiplex-Sendeanlage 3 zehn Verbraucher (Nachheizkörper) 6₁, 6₂, 6₃, ..., 6₁₀ angeschlossen, die beispielsweise mit einer Übertragungsrate von einem Datenpaket/Sekunde angesprochen werden. Dieses Datenpaket enthält bei einer einfachen Ausführungsform einschließlich Synchronisation und Fehlersicherung ca. 20 bis 30 Bit. Bei einer solchen Ausführungsform erfolgt die Zuordnung des Multiplex-Signals zu den einzelnen Verbrauchern (Demultiplex-Vorgang) über die Position des Bits innerhalb des Paketes, wobei beispielsweise ein gesetztes Bit das Einschalten des Verbrauchers und ein nicht gesetztes Bit ein Abschalten dieses Verbrauchers bewirkt oder umgekehrt. Zu diesem Zweck müssen jedoch die an das Multiplex-System angeschlossenen Verbraucher 6 in der zentralen Steuereinheit 1 registriert sein.

Ein weiterer Vorteil einer erfindungsgemäßen Steuerungsvorrichtung liegt darin, daß bei einfachen Verbrauchern, wie z.B. Nachheizkörper, ohne Zusatzaufwand eine wirksame Fehlerdiagnose durchgeführt werden kann. Bei einer solchen Diagnose, die vorteilhafterweise bei jedem Einschalten der Steuerungsvorrichtung im Sinne eines Selbsttests automatisch durchgeführt wird, wird sequentiell jeweils ein Verbraucher eingeschaltet, wobei der in der Stromversorgungsleitung hervorgerufene Stromfluß gemessen und der zentralen Steuereinheit mitgeteilt wird. Wenn der gemessene Wert für den jeweiligen Verbraucherstrom einen bestimmten Wert unter- oder überschreitet, wird von der zentralen Steuereinheit eine Fehlermeldung ausgegeben, wobei die Art des aufgetretenen Fehlers und der betroffene Verbraucher angegeben werden.

Bei der in Figur 1 dargestellten Ausführungsform der Erfindung ist die Multiplex-Verbindung entweder eine elektrische oder eine optische Leitung. Die elektrische Leitung kann beispielsweise eine einzige, dafür vorgesehene Signalleitung sein. Bei der Ausführungsform, bei welcher als Multiplex-Verbindung eine optische Leitung vorgesehen ist, wird in dem Schienenfahrzeug ein Lichtwellenleiter angeordnet, welcher senderseitig an eine steuerbare Lichtquelle und empfängerseitig an je einen optischen Detektor angeschlossen ist. Als Lichtquelle dient im vorliegenden Fall eine Laserdiode, wobei als Detektor eine Photodiode verwendet wird. Eine solche Datenübertragung zeichnet sich durch große Störsicherheit aus.

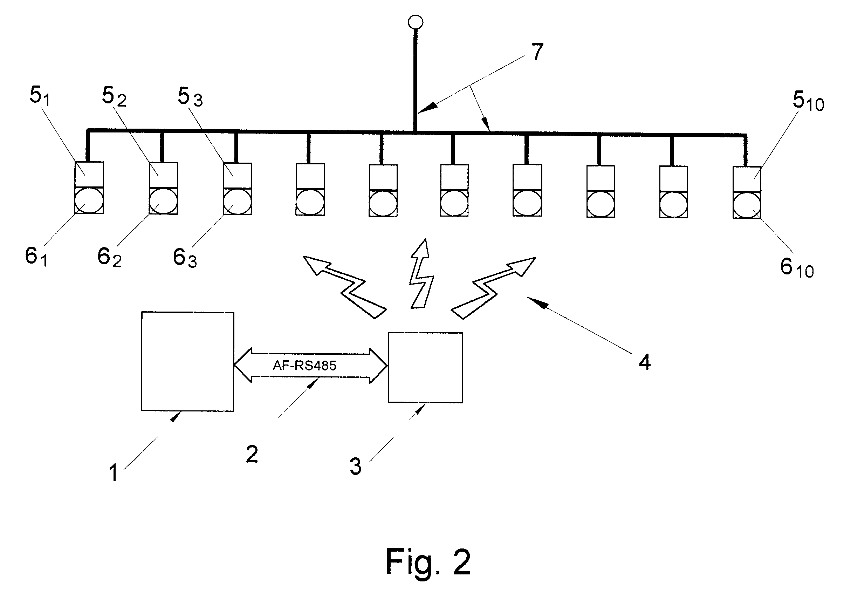

In Figur 2 ist eine Ausführungsform der Erfindung dargestellt, bei welcher die Multiplex-Verbindung entweder eine Infrarot- oder eine Funkstrecke ist. Bei dieser Ausführungsform weist die Multiplex-Sendeanlage einen Infrarot- bzw. Funksignal-Sender und die Multiplexempfänger einen Infrarot-Detektor bzw. einen Funksignal-Empfänger auf. Die Ausführungsform mit einer Infrarotstrecke wird vorzugsweise bei Sichtkontakt zwischen Sender und Empfänger eingesetzt. Bei großen Entfernungen zwischen Sender und Empfänger, insbesondere wenn der Empfänger verbaut oder verdeckt ist, empfiehlt sich die Ausführungsform mit einer Funkstrecke als Multiplex-Verbindung.

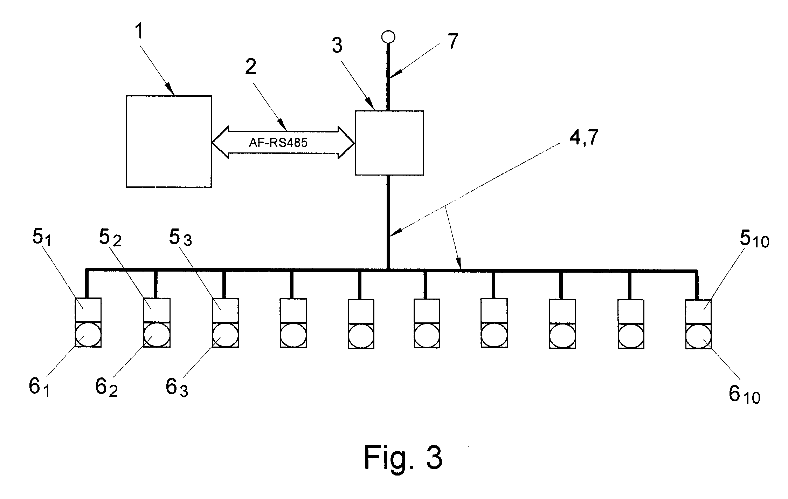

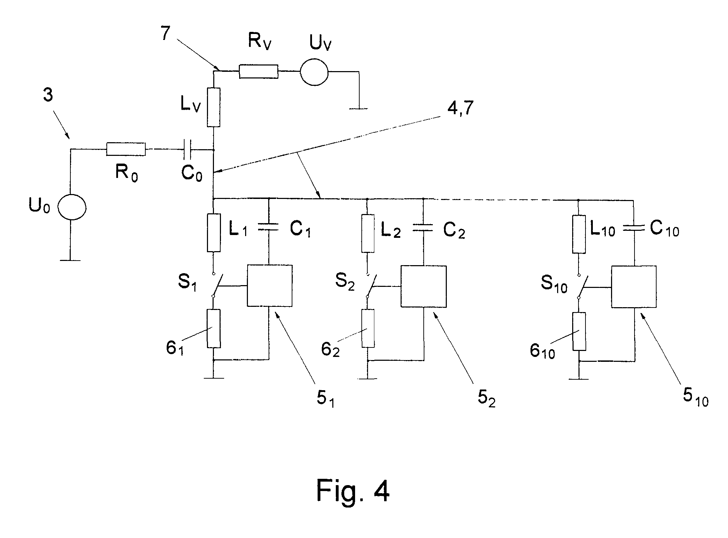

Figur 3 zeigt eine weitere Ausführungsform der Erfindung, bei welcher die Stromversorgungsleitung 7 gleichzeitig als Multiplex-Verbindung verwendet wird. Bei dieser Ausführungsform wird das Steuersignal von der Multiplex-Sendeanlage in die Versorgungsleitung eingekoppelt und von den Multiplexempfängern wieder ausgekoppelt. Eine Ausführungsvariante für ein solches Ein- bzw. Auskoppeln des Steuersignals ist in Figur 4 schematisch dargestellt. Die einzelnen Verbraucher 6₁, 6₂, ..., 6₁₀ liegen über je einen gesteuerten Schalter S₁, S₂, ..., S₁₀ an einer elektrischen Versorgungsleitung 7, die von einer elektrischen Energiequelle Uᵥ mit einem Innenwiderstand R_{V} mit elektrischem Strom gespeist wird, wobei diese Versorgungsleitung gleichzeitig zur Signalübertragung dient. Das Steuersignal U₀ wird von der Multiplex-Sendeanlage 3 über einen Kondensator C₀ in die Versorgungs/Signalleitung 4, 7 eingekoppelt, wobei die Frequenz des Steuersignals U₀ um ein Vielfaches höher ist, als die Frequenz der Versorgungsspannung. Die Frequenz der Versorgungsspannung liegt typischerweise bei 0 Hz (Gleichspannung) oder bei 50 Hz (380/220 Wechselspannung), wogegen die Frequenz, mit welcher das Steuersignal übertragen wird, in der Größenordnung von einigen 10 kHz bis einigen 100 kHz oder darüber liegt. Empfängerseitig wird das Steuersignal wieder über je einen Kondensator C₁, C₂, ..., C₁₀ aus der Versorgungs/Signalleitung 4, 7 ausgekoppelt und je einem Stellglied 5₁, 5₂, ..., 5₁₀ zugeführt, welches je einen zugeordneten Schalter S₁, S₂, ..., S₁₀ (beispielsweise einen Triac) betätigt.

Zusätzlich ist bei der vorliegenden Ausführungsform in Serie mit jedem Verbraucher 6₁, 6₂, ..., 610 je eine Induktivität L₁, L₂, ..., L₁₀ geschaltet, sodaß der Widerstand für das höherfrequente Steuersignal beispielsweise um einen Faktor 10 bis 100 größer ist, als für die niederfrequente Stromversorgung. Dadurch ergibt sich eine wesentliche Verminderung des Einflusses der Verbraucherwiderstände auf die Belastung der Steuersignalquelle U₀, R₀ und somit eine bessere Detektierbarkeit des Steuersignals an den Stellgliedern, sowie ein störungssicherer Betrieb der erfindungsgemäßen Steuerungsvorrichtung. Weiters ist ebenso zu diesem Zweck in Serie mit der elektrischen Stromversorgung U_{V} eine Induktivität L_{V} geschaltet, sodaß der Pfad des Steuersignals U₀ in Richtung Stromversorgung U_{V} hochohmiger wird und somit weitere Signalverluste vermieden werden können. Diese Induktivitäten sind insbesondere bei niederohmigen Verbrauchern wie Nachheizkörpern vorteilhaft einsetzbar.

Die bei dieser Ausführungsform zu übertragenden Steuersignale U₀ werden vorteilhafterweise über ein Trägersignal übertragen, das wahlweise entweder frequenz- oder phasenmoduliert ist. Eine frequenzmodulierte Signalübertragung ist einfacher zu realisieren, wogegen eine Phasenmodulation eine höhere Störsicherheit gewährleistet.

## Patentansprüche

1. Steuerungsvorrichtung für zumindest zwei in einem Schienenfahrzeug angeordnete elektrische Verbraucher (6₁, 6₂, 6₃, ... 6₁₀), die über je ein Stellglied (5₁, 5₂, 5₃, ... 5₁₀) an eine Stromversorgungsleitung (7) angeschlossen sind, wobei jedes Stellglied (5₁, 5₂, 5₃, 5₁₀) von einer zentralen Steuereinheit (1) ansteuerbar ist, **dadurch gekennzeichnet, daß** der zentralen Steuereinheit (1) zur Ansteuerung der zumindest zwei Verbraucher (6₁, 6₂, 6₃, ... 610) eine Multiplex-Sendeanlage (3) zugeordnet ist, welche über eine Multiplex-Verbindung (4) mit je einem Multiplexempfänger für jedes anzusteuernde, dem zugehörigen Verbraucher räumlich benachbarte Stellglied (5₁, 5₂, 5₃, 5₁₀) verbunden ist.

2. Steuerungsvorrichtung nach Anspruch 1, **dadurch gekennzeichnet, daß** die Multiplex-Verbindung (4) eine elektrische Leitung ist.

3. Steuerungsvorrichtung nach Anspruch 1, **dadurch gekennzeichnet, daß** die Multiplex-Verbindung (4) eine optische Leitung ist.

4. Steuerungsvorrichtung nach Anspruch 1, **dadurch gekennzeichnet, daß** die Multiplex-Verbindung (4) eine Funkstrecke ist.

5. Steuerungsvorrichtung nach Anspruch 2, **dadurch gekennzeichnet, daß** die Multiplex-Verbindung (4) gleichzeitig die Stromversorgungsleitung (7) für die Verbraucher (6₁, 6₂, 6₃, ... 6₁₀) ist.

6. Steuerungsvorrichtung nach Anspruch 3, **dadurch gekennzeichnet, daß** die Multiplex-Sendeanlage (3) eine steuerbare Lichtquelle zur Abgabe optischer Signale und der Multiplexempfänger einen optoelektrischen Detektor aufweist.

7. Steuerungsvorrichtung nach Anspruch 6, **dadurch gekennzeichnet, daß** die optische Leitung ein Lichtwellenleiter, die Lichtquelle eine Laserdiode und der optoelektrische Detektor eine Photodiode ist.

8. Steuerungsvorrichtung nach einem der Ansprüche 1 bis 7, **dadurch gekennzeichnet, daß** die Multiplex Sendeanlage (3) zur Abgabe eines frequenzmodulierten Signals geeignet ist.

9. Steuerungsvorrichtung nach einem der Ansprüche 1 bis 7, **dadurch gekennzeichnet, daß** die Multiplex Sendeanlage (3) zur Abgabe eines phasenmodulierten Signals geeignet ist.

10. Steuerungsvorrichtung nach Anspruch 5, **dadurch gekennzeichnet, daß** zur Einkopplung des Sendesignals zwischen der Stromversorgungsleitung (7) und der Multiplex-Sendeanlage ein Kondensator (C₀) vorgesehen ist.

11. Steuerungsvorrichtung nach Anspruch 5, **dadurch gekennzeichnet, daß** zur Auskopplung des Empfangssignals zwischen der Stromversorgungsleitung (7) und dem Multiplexempfänger je ein Kondensator (C₁, C₂, ... C₁₀) vorgesehen ist.

12. Steuerungsvorrichtung nach Anspruch 11, **dadurch gekennzeichnet, daß** in Serie zu jedem Verbraucher (6₁, 6₂, ... 6₁₀) eine Induktivität (L₁, L₂, L₁₀) an die Stromversorgungsleitung (7) angeschaltet ist.

13. Steuerungsvorrichtung nach einem der Ansprüche 1 bis 12, **dadurch gekennzeichnet, daß** der Verbraucher (6₁, 6₂, ... 6₁₀) ein Heizkörper, insbesondere ein Nachheizkörper einer Klimaanlage ist.

14. Steuerungsvorrichtung nach einem der Ansprüche 1 bis 12, **dadurch gekennzeichnet, daß** der Verbraucher (6₁, 6₂, ... 6₁₀) eine Lichtquelle für Anzeige- oder Beleuchtungszwecke ist.

15. Steuerungsvorrichtung nach einem der Ansprüche 1 bis 12, **dadurch gekennzeichnet, daß** der Verbraucher (6₁, 6₂, ... 6₁₀) ein elektromechanischer Wandler ist, insbesondere ein Solenoid, welcher seinerseits Bestandteil eines elektrischen, pneumatischen, hydraulischen oder kinematischen Schalt- oder Stellorgans ist.

16. Steuerungsvorrichtung nach einem der Ansprüche 1 bis 15, **dadurch gekennzeichnet, daß** die Stellglieder (5₁, 5₂, ... 5₁₀) Schalter (S₁, S₂, S₁₀) aufweisen und die zentrale Steuereinheit (1) zum selektiven Ein- und Ausschalten der Verbraucher (6₁, 6₂, ... 6₁₀) über die Multiplex-Verbindung (4) eingerichtet ist.

17. Steuerungsvorrichtung nach Anspruch 16, **dadurch gekennzeichnet, daß** die zentrale Steuereinheit (1) im Rahmen einer Diagnoseroutine zum sequentiellen, selektiven Ein- und Ausschalten einzelner Verbraucher (6₁, 6₂, ... 6₁₀) einer Gruppe von Verbrauchern sowie zur Messung des Stromes in einer zu dieser Gruppe von Verbrauchern führenden Leitung (7) eingerichtet ist.
